# FASCICULE DE BREVET EUROPEEN

(11) **EP 1 000 774 B1**
(45) Date de publication et mention de la délivrance du brevet: **24.03.2004**
(21) Numéro de dépôt: 99121758.9
(22) Date de dépôt: 03.11.1999
(51) Int. Cl.: B60C 17/04, B60C 17/06

(54) **Appui de sécurité en matériau élastomérique injectable pour pneumatique**
Sicherheitsstütze aus injizierbarem elastomerMaterial für Reifen
Safety support made of injectable elastomeric material for a tyre

(30) Priorité: 12.11.1998 FR 9814244
(43) Date de publication de la demande: 17.05.2000
(73) Titulaire: Société de Technologie Michelin, 63040 Clermont-Ferrand Cedex 09 (FR); MICHELIN RECHERCHE ET TECHNIQUE S.A., CH-1763 Granges-Paccot (CH)
(72) Inventeur: Lacour, Jean-Charles, 63000 Clermont-Ferrand (FR)
(74) Mandataire: Dequire, Philippe Jean-Marie Denis

(56) Documents cités:
- EP-A- 0 721 854
- EP-A- 0 796 747
- US-A- 4 248 286
- US-A- 5 634 993

## Description

La présente invention se rapporte à la fabrication de bandages élastiques comme des appuis utilisés à l'intérieur de pneumatiques pour supporter la charge en cas de crevaison. Plus précisément, elle concerne la fabrication des appuis comportant à leur base une ceinture sensiblement inextensible réalisée au moyen de fils de renforcement du genre de ceux renforçant usuellement les pneumatiques.

La demande de brevet EP 0 796 747 décrit un exemple particulier d'un tel appui. A la figure 1 de ladite demande EP 0 796 747, on voit que la base 10 de l'appui est renforcée par des fils 11 disposés sensiblement à zéro degré par rapport à un plan perpendiculaire à l'axe de rotation de l'appui.

Le document US 5 634 993 décrit un appui correspondant au préambule de la revendication 1.

Dans la présente demande, on entend par « fil », aussi bien des monofilaments que des multifilaments, ou des assemblages comme des câbles, des retors ou bien encore n'importe quel type d'assemblage équivalent, et ceci, quels que soient la matière et le traitement de ces fils, par exemple traitement de surface ou enrobage ou préencollage pour favoriser l'adhérence avec le caoutchouc. On entend par « zéro degré » un angle mesuré par rapport à la direction circonférentielle, c'est à dire par rapport à un plan perpendiculaire à l'axe de rotation du support, reprenant ainsi les conventions usuelles pour les pneumatiques. Il est dit que l'angle vaut « sensiblement » zéro degré parce que le renforcement permettant de s'opposer à la centrifugation du support est réalisé par bobinage d'un fil ou d'une bandelette de fils parallèles, avec un certain pas de pose, d'où il résulte que l'angle ne vaut pas zéro degré stricto sensu, mais est en pratique au moins localement légèrement supérieur à zéro degré pour pouvoir balayer toute la largeur voulue. On entend par « plan équatorial » de l'appui, tout plan perpendiculaire à l'axe de symétrie de rotation de l'appui.

Un matériau convenable pour réaliser un tel appui est le caoutchouc.

On connaît différentes techniques de fabrication d'un objet moulé : moulage par compression, moulage transfert, moulage par injection. Le moulage par compression suppose l'introduction du volume de caoutchouc nécessaire à l'intérieur du moule avant tous deux la fermeture du moule avant l'introduction du volume de caoutchouc nécessaire dans celui-ci. Le choix dépend notamment des séries projetées. Le moulage par injection, plus coûteux en investissement initial, s'avère d'un coût marginal plus bas et permet d'atteindre une plus grande qualité géométrique en raison d'une meilleure uniformité des pressions et températures de matière pendant la réaction de vulcanisation.

Mais l'injection, ainsi que le transfert, se prêtent mal aux produits non homogènes, qui sont renforcés par des renforcements flexibles. En particulier, ces procédés impliquant l'introduction de matière dans un moule fermé sont mal adaptés lorsque le renforcement est une nappe de fils car les fils ne se tiennent pas, ou très mal, dans le moule. Le caoutchouc refoulé dans le moule entraîne avec lui les fils lorsqu'il remplit le moule. Il est donc très problématique d'assurer un positionnement précis des fils dans l'appui vulcanisé. C'est pourquoi on ne retient pas le refoulement de caoutchouc dans un moule fermé pour les pièces en caoutchouc renforcées par des fils. Il est par exemple bien connu que les pneumatiques ne sont pas injectés ; on réalise d'abord une ébauche crue à une forme assez proche de la forme finale de fabrication du pneumatique, l'ébauche comportant les fils de renforcement insérés à l'endroit voulu entre les différentes couches de caoutchouc, puis on assure le moulage en refermant autour de l'ébauche les éléments moulants nécessaires.

L'invention a pour objet un appui tel que celui décrit dans la demande de brevet EP 0 796 747 qui peut être fabriqué par refoulement de matière dans un moule préalablement fermé, tout en garantissant que la position des fils de renfort voulue par le concepteur de l'appui est parfaitement respectée.

L'objectif de l'invention est atteint par un appui selon la revendication 1.

L'appui de sécurité selon l'invention est destiné à être monté sur une jante de véhicule. Cet appui comporte un axe de rotation, une base limitée par une face radialement intérieure sensiblement cylindrique destinée à être montée autour de la jante, et un corps formant support attaché à la base. La base comprend un ensemble de fils de renfort circonférentiels sensiblement inextensibles enrobés dans une matrice en matériau élastomérique. L'appui est réalisé par refoulement sous pression dans une cavité fermée à partir de points d'alimentation disposés au niveau du corps de l'appui. Cet appui est caractérisé en ce que la base comporte des éléments de renfort complémentaires disposés, au moins en partie, radialement extérieurement relativement à l'ensemble de fils de renfort circonférentiels et axialement en regard des points d'alimentation.

De préférence, les éléments de renfort complémentaires comprennent des fils de renfort orientés relativement à la direction circonférentielle d'un angle α supérieur ou égal à 60 degrés.

Les éléments de renfort complémentaires contiennent les déplacements des fils de renfort circonférentiels lors du refoulement sous pression dans la cavité de moulage. Ce sont ces éléments de renfort complémentaires qui sont les premiers en contact avec le front de refoulement de la matière dans la cavité. Comme ce front est sensiblement dans un même plan axial, l'orientation des fils de renfort d'un angle α supérieur à 60 degrés relativement à la direction circonférentielle leur permet de bien résister à tout déplacement induit par ce front de refoulement. En conséquence, la position des fils de renfort circonférentiels disposés sous les éléments de renforts complémentaires est, elle aussi, maintenue dans la position voulue par le concepteur de l'appui.

Il est à noter que ces éléments de renfort complémentaires n'ont aucun rôle fonctionnel pour l'appui en fonctionnement. Leur rôle est limité à faciliter la réalisation d'appuis ayant des fils de renfort circonférentiels disposés selon la volonté du concepteur de l'appui.

Selon un premier mode de réalisation, les points d'alimentation étant sensiblement disposés dans un même plan équatorial, sensiblement dans la partie centrale du corps de l'appui, les renforts complémentaires s'étendent axialement sur une longueur 2L supérieure ou égale au tiers de la largeur axiale de la base de l'appui. L'extension axiale des éléments de renfort complémentaires est, de préférence, limitée à la moitié de la base de l'appui.

Selon un second mode de réalisation, les points d'alimentation étant sensiblement disposés dans un même plan équatorial d'un côté dudit appui, les renforts complémentaires entourent l'extrémité axiale de l'ensemble de fils de renfort circonférentiels du côté de l'appui et s'étendent axialement extérieurement relativement à l'ensemble de fils de renfort circonférentiels sur une longueur L supérieure ou égale à 10 mm. De préférence, L est inférieure ou égale à 30 mm.

Dans ce dernier cas, on a constaté qu'une longueur L inférieure à 10 mm était insuffisante pour limiter efficacement les déplacements des fils de renfort circonférentiels dus au phénomène d'entraînement lié au front de refoulement de la matière injectée lors du refoulement sous pression dans le moule. En revanche, au-delà d'une longueur de 30 mm, l'effet est pratiquement toujours similaire. Cela augmenterait le coût et le poids de l'appui sans apporter d'amélioration à la précision de placement des fils circonférentiels.

La nature des fils de renforts complémentaires peut être très variée. On peut utiliser un tissu croisé ou deux nappes avec des fils orientés selon + et - α. On peut aussi avoir une seule nappe avec des fils orientés selon un angle α supérieur ou égal à 80 degrés et préférentiellement à 90 degrés.

Dans le contexte de la présente invention, on assimilera à un appui, accessoire destiné à être monté à l'intérieur d'un pneumatique pour lui conférer un mode de fonctionnement temporaire à pression nulle, un bandage non pneumatique conçu pour être utilisé seul en service normal, les adaptations de choix des matériaux constitutifs et/ou de dessin de l'objet lui-même n'étant pas le propos de la présente demande de brevet. Autrement dit, la présente invention peut trouver application quelle que soit la destination précise de l'objet, et n'est pas limitée à une conception particulière de l'objet moulé, pourvu qu'il soit renforcé par des fils, ni à un matériau particulier, pourvu qu'il soit réalisable par refoulement sous pression dans une cavité fermée.

La description suivante illustre un mode préféré de réalisation de l'invention. Aux différentes figures, on voit :
- à la figure 1, une coupe axiale d'un appui de sécurité selon l'invention ;
- à la figure 2, une coupe axiale d'un moule destiné à réaliser l'appui de la figure 1 ;
- à la figure 3, une coupe axiale d'un second mode de réalisation d'un appui selon l' invention ; et
- à la figure 4, une coupe axiale d'un troisième mode de réalisation d'un appui selon l'invention.

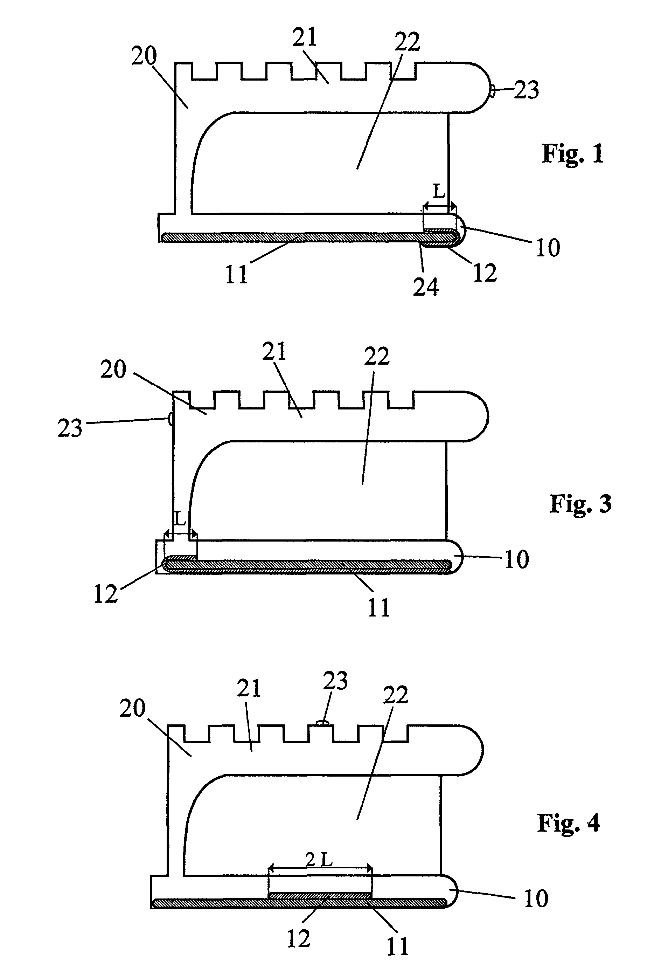

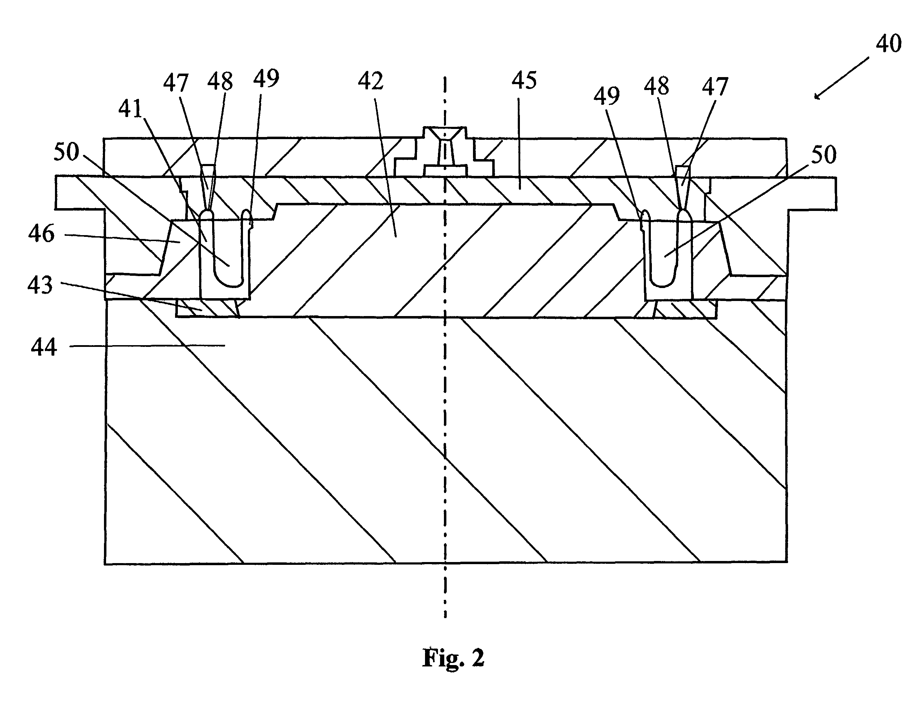

A la figure 1, on voit une coupe axiale d'un appui de sécurité selon l'invention. Cet appui correspond substantiellement à celui décrit dans la demande de brevet EP 0 796 747. Cet appui comprend une base 10, et un corps 20 de formes généralement annulaires. Le corps comprend un sommet 21 ainsi qu'une série d'évidements 22 qui s'étendent axialement dans la partie centrale du corps et débouchent d'un seul côté. Ces évidements sont régulièrement répartis sur toute la circonférence du corps 20. Le sommet du corps comporte aussi des protubérances 23 qui sont dues à la réalisation de l'appui par injection. Ces protubérances 23 indiquent la présence des points d'alimentation de la matière lors de l'injection. Les protubérances 23 sont régulièrement réparties sur la circonférence du sommet 21.

La base 10 est renforcée par une nappe 11 dont les fils de renfort sont orientés longitudinalement sensiblement à 0 degrés. Elle comprend aussi une nappe 12 qui entoure l'extrémité axiale de la nappe 11 du côté des protubérances 23. Cette nappe 12 est constituée de fils de renfort orientés à 90 degrés relativement à la direction circonférentielle de l'appui. Cette nappe 12 s'étend axialement, de part et d'autre de la nappe 11, sur une distance L comprise entre 10 et 30 mm. La nappe 12 est disposée axialement en regard des protubérances 23, c'est-à-dire qu'elle protège les fils de renfort circonférentiels les plus proches des protubérances 23. L'épaisseur radiale de la base 10, en regard des évidements 22 du corps 20 est assez faible, typiquement inférieure à 15 mm.

On voit aussi que la face radialement intérieure de la base 10 comporte un décrochement radial 24 du côté de la nappe 12 de telle sorte que la présence de la nappe 12 ne modifie pas localement le diamètre effectif des fils de renforcement circonférentiels de la nappe 11.

Il est à noter que la nappe 12 pourrait aussi s'étendre, radialement intérieurement relativement à la nappe 11, sur toute la largeur axiale de la base de l'appui. Dans ce cas, il serait inutile de prévoir un décrochement 24, puisque tous les fils circonférentiels de la nappe 11 seraient disposés à égale distance de l'axe de rotation de l'appui.

La figure 2 présente une coupe axiale d'un moule d'injection d'un appui selon l'invention. On voit la cavité de moulage 41, à la forme de fabrication de l'appui. Cette cavité 41 est définie par un noyau intérieur 42 et des pièces complémentaires que sont un plateau inférieur 43 (monté sur un porte plateau 44), un plateau supérieur 45 et des segments 46 moulant la surface d'appui proprement dite, située radialement à l'extérieur de l'appui. Etant donné les sillons et bossages que l'on souhaite mouler sur la surface d'appui (voir la figure 1), celle-ci est moulée par une pluralité de segments 46, capables d'un mouvement radial. On aperçoit deux des canaux d'injection 47 de la matière lors du refoulement de la cavité. Ces canaux définissent les points d'alimentation 48. Ces points sont régulièrement répartis sur la circonférence de l'appui. Dans le mode de réalisation décrit, les points d'alimentation 48 sont disposés sensiblement dans un même plan équatorial du moule d'un même côté de l'appui.

Le plateau supérieur comporte aussi des doigts 50, faisant protubérance, destinés à mouler les évidements 22 de l'appui.

Le moule 40 est installé dans une presse d'injection comportant des moyens (non représentés) pour commander le mouvement des segments 46 et est dotée d'un mécanisme capable d'imprimer un mouvement d'éloignement et de rapprochement relatif du porte plateau 44 et du plateau supérieur 45. Ce mouvement d'éloignement et de rapprochement relatif permet l'ouverture du moule pour notamment enlever l'appui après vulcanisation.

On réalise usuellement un appui tel que présenté à la figure 1 comme suit. On préfabrique un anneau formant une sorte de ceinture contenant la nappe 11 de fils circonférentiels de renfort ainsi que la nappe complémentaire 12. Pour fabriquer un tel anneau, on peut, par exemple, utiliser un mandrin comparable à un tambour pour le premier stade de la fabrication d'un pneumatique. Sur ce mandrin, on dépose une nappe 12 de largeur 2 L comportant des fils de renforcement orientés à 90 degrés de la direction circonférentielle du mandrin enrobés dans une matrice élastomérique, puis, on applique, en recouvrant partiellement la nappe 12, une nappe 11 de fils orientés à 0 degrés enrobés dans une matrice élastomérique. Cette nappe peut être constituée d'un fil unique enrobé de caoutchouc, une bandelette de fils calandrés dans du caoutchouc, ou une nappe de fils calandrés dans du caoutchouc, comme bien connu pour la fabrication des frettes à zéro degré que l'on trouve couramment dans le sommet des pneumatiques pour véhicules de tourisme. Enfin, on retourne l'extrémité libre de la nappe 12 sur la nappe 11. La nappe 11 comportant des fils de renforcement circonférentiels quasiment inextensible, son développement doit correspondre sensiblement à celui de la paroi radialement intérieure du noyau 42. Cette paroi comporte un décrochement radial 49 du côté des points d'alimentation 48 pour tenir compte de l'épaisseur de la nappe 12.

Ensuite, le plateau supérieur 45 du moule 40 étant ouvert, on introduit l'anneau ainsi préparé dans la cavité 41 en commençant par l'extrémité de la nappe 11 opposée à la nappe 12.

On ferme le moule en rapprochant le plateau supérieur 45 du plateau intérieur 43 ainsi que radialement les segments 46 de leur position de moulage.

On injecte le caoutchouc à une température appropriée dans la cavité 41 à partir des points d'alimentation 48.

Après refoulement complet du caoutchouc dans la cavité, on laisse vulcaniser le caoutchouc, on ouvre la cavité de moulage et on retire l'appui.

Lors de l'injection du caoutchouc dans la cavité 41, à partir des canaux 47 et points d'alimentation 48, le front de refoulement de la matière va progressivement remplir la cavité 41 en heurtant en premier la nappe 12 disposée en regard des points d'alimentation 48 avant de progressivement entrer en contact axialement avec l'ensemble de la paroi radialement extérieure de la nappe 11. Le flux de caoutchouc va avoir un effet d'entraînement de cette nappe 12 en direction de l'extrémité encore libre de l'appui. Comme cette nappe 12 comporte des fils orientés dans la direction du flux et bien ancrés de part et d'autre de l'extrémité de la nappe 11, cette nappe 12 va s'opposer au déplacement induit par le flux de matière et permettre aux fils de la nappe 11 de rester dans leur position d'origine.

On constate qu'un ancrage de la nappe 11 sur une longueur L comprise entre 10 et 30 mm est suffisant pour obtenir dans les conditions usuelles de pression et de température d'injection une bonne stabilité des renforts de la base de l'appui.

La figure 3 présente un second mode de réalisation d'un appui selon l'invention. Dans ce cas, les protubérances 23 correspondant aux points d'alimentation de la matière lors du refoulement de la cavité du moule sont disposées du côté non débouchant des évidements 22. En conséquence, la nappe 12 est disposée de ce même côté des évidements. Pour garantir une disposition homogène des fils de renfort circonférentiels, il est à noter que la nappe 12 s'étend axialement extérieurement relativement à la nappe 11 sur une longueur L comme précédemment. En revanche, cette nappe 12 s'étend sous la nappe 11 sur toute la largeur de la nappe 11. En conséquence, la surface radialement intérieure de l'appui peut être complètement cylindrique.

Ce mode de réalisation correspond à une disposition inversée des évidements du moule. Dans ce cas, les évidements 50 sont rattachés au plateau inférieur et non au plateau supérieur.

La figure 4 présente un mode de réalisation de l'appui dans lequel les protubérances 23 sont disposées sensiblement axialement dans la partie centrale du corps de l'appui. Dans ce cas, la nappe 12 est disposée en regard du plan axial de ces protubérances sensiblement au centre de la nappe 11. La nappe 12 s'étend axialement sur une longueur 2L comprise entre le tiers et la moitié de la largeur axiale de la base de l'appui. La nappe 12 s'étend axialement de part et d'autre du plan axial des protubérances 23. La demanderesse a en effet constaté que la largeur axiale de la nappe 12 devait, dans ce mode de réalisation, être fonction de la largeur axiale de l'appui.

Ce mode de réalisation correspond à des canaux d'alimentation 48 traversant les segments 45.

## Revendications

1. Appui de sécurité destiné à être monté sur une jante de véhicule, ledit appui ayant un axe de rotation, une base (10) limitée par une face radialement intérieure sensiblement cylindrique destinée à être montée autour de ladite jante, et un corps (20) formant support attaché à ladite base, ladite base (10) comportant un ensemble (11) de fils de renfort circonférentiels sensiblement inextensibles enrobés dans une matrice en matériau élastomérique, ledit appui étant réalisable par refoulement sous pression dans une cavité fermée à partir de points d'alimentation disposés au niveau dudit corps dudit appui **caractérisé en ce que** ledit corps comprend des protubérances (23) correspondant auxdits points d'alimentation et **en ce que** ladite base (10) comporte des éléments de renfort complémentaires (12) disposés, au moins en partie, radialement extérieurement relativement audit ensemble (11) de fils de renfort circonférentiels et axialement en regard desdites protubérances (23).

2. Appui selon la revendication 1, dans lequel lesdits fils de renfort complémentaires (12) comprennent des fils de renfort orientés relativement à la direction circonférentielle d'un angle (α) supérieur ou égal à 60 degrés.

3. Appui selon l'une des revendications 1 ou 2, dans lequel, lesdites protubérances (23) étant sensiblement disposées dans un même plan équatorial, sensiblement dans la partie centrale du corps de l'appui, lesdits renforts complémentaires (12) s'étendent axialement sur une longueur (2L) supérieure ou égale au tiers de la largeur axiale de la base (10) dudit appui.

4. Appui selon la revendication 3, dans lequel les renforts complémentaires (12) s'étendent axialement sur une longueur (2L) inférieure à la moitié de la largeur axiale de la base (10) de l'appui.

5. Appui selon l'une des revendications 1 ou 2, dans lequel, lesdites protubérances (23) étant sensiblement disposées dans un même plan équatorial d'un côté dudit appui, lesdits renforts complémentaires (12) entourent l'extrémité axiale dudit ensemble (11) de fils de renfort circonférentiels dudit côté dudit appui et s'étendent axialement, extérieurement relativement audit ensemble de fils de renfort circonférentiels, sur une longueur (L) supérieure ou égale à 10 mm.

6. Appui selon la revendication 5, dans lequel les éléments de renfort complémentaires (12) s'étendent axialement sur une longueur (L) inférieure ou égale à 30 mm.

7. Appui selon l'une des revendications 1 à 6, dans lequel lesdits éléments de renfort complémentaires (12) sont constitués d'un tissu croisé avec des fils orientés selon (+ α) et (- α).

8. Appui selon l'une des revendications 1 à 6, dans lequel lesdits éléments de renfort complémentaires (12) sont constitués de deux nappes avec des fils orientés selon (+ α) et (- α.)

9. Appui selon l'une des revendications 1 à 6, dans lequel lesdits éléments de renfort complémentaires (12) sont constitués d'une nappe avec des fils orientés selon un angle (α) supérieur ou égal à 80 degrés.

10. Appui selon la revendication 9, dans lequel lesdits fils sont orientés à 90 degrés relativement à la direction circonférentielle.

## Patentansprüche

1. Sicherheitsstütze, die zur Montage auf einer Fahrzeugfelge bestimmt ist, wobei die genannte Stütze eine Drehachse, eine Basis (10), die durch eine radial innere, im wesentlichen zylindrische Fläche begrenzt ist, die dazu bestimmt ist, rund um die genannte Felge montiert zu werden, und einen Körper (20) aufweist, der einen Träger bildet, der an der genannten Basis angebracht ist, wobei die genannte Basis (10) eine Anordnung (11) aus in Umfangsrichtung verlaufenden, im wesentlichen undehnbaren Verstärkungsdrähten aufweist, die in eine Matrix aus Elastomermaterial eingehüllt sind, und wobei die genannte Stütze durch Eingießen unter Druck in einen geschlossenen Hohlraum von Einspeisungspunkten her herstellbar ist, die auf Höhe des genannten Körpers der genannten Stütze angeordnet sind, **dadurch gekennzeichnet, daß** der genannte Körper Ausstülpungen (23) aufweist, die den genannten Einspeisungspunkten entsprechen, und daß die genannte Basis (10) komplementäre Verstärkungselemente (12) aufweist, die mindestens teilweise radial außen, auf die genannte Anordnung (11) der in Umfangsrichtung verlaufenden Verstärkungsdrähte bezogen und axial den genannten Ausstülpungen (23) gegenüberliegend, angeordnet sind.

2. Stütze nach Anspruch 1, worin die genannten, komplementären Verstärkungsdrähte (12) Verstärkungsdrähte aufweisen, die relativ zur Umfangsrichtung unter einem Winkel (α) ausgerichtet sind, der größer oder gleich 60 Grad ist.

3. Stütze nach einem der Ansprüche 1 oder 2, worin, während die genannten Ausstülpungen (23) im wesentlichen in ein und derselben Äquatorialebene im wesentlichen im mittleren Teil des Körpers der Stütze angeordnet sind, die genannten komplementären Verstärkungen (12) sich axial über eine Länge (2L) erstrecken, die größer oder gleich einem Drittel der axialen Breite der Basis (10) der genannten Stütze ist.

4. Stütze nach Anspruch 3, worin sich die genannten komplementären Verstärkungen (12) axial über eine Länge (2L) erstrecken, die größer oder gleich der Hälfte der axialen Breite der Basis (10) der genannten Stütze ist.

5. Stütze nach einem der Ansprüche 1 oder 2, worin, während die genannten Ausstülpungen (23) in ein und derselben Äquatorialebene auf der einen Seite der genannten Stütze angeordnet sind, die genannten, komplementären Verstärkungen (12) das axiale Ende der genannten Anordnung (11) von in Umfangsrichtung verlaufenden Verstärkungsdrähten der genannten Seite der genannten Stütze umgeben und sich axial aussen, in Bezug auf die genannte Gruppe von in Umfangsrichtung verlaufenden Verstärkungsdrähten, über eine Länge (L) erstrecken, die größer oder gleich 10 mm ist.

6. Stütze nach Anspruch 5, worin sich die komplementären Verstärkungselemente (12) axial über eine Länge (L) erstrecken, die kleiner oder gleich 30 mm ist.

7. Stütze nach einem der Ansprüche 1 bis 6, worin die genannten, komplementären Verstärkungselemente (12) aus einem überkreuz liegenden Gewebe mit Drähten gebildet sind, die längs (+ α) und (-α) ausgerichtet sind.

8. Stütze nach einem der Ansprüche 1 bis 6, worin die genannten, komplementären Verstärkungselemente (12) aus zwei Lagen mit Drähten gebildet sind, die längs (+ α) und (-α) ausgerichtet sind.

9. Stütze nach einem der Ansprüche 1 bis 6, worin die genannten, komplementären Verstärkungselemente (12) aus einer Lage mit Drähten gebildet sind, die längs eines Winkels (α) ausgerichtet sind, der größer oder gleich 80 Grad beträgt.

10. Stütze nach Anspruch 9, worin die genannten Drähte unter 90 Grad bezüglich der Umfangsrichtung ausgerichtet sind.

## Claims

1. A safety support to be mounted on a vehicle rim, said support having an axis of rotation, a base (10) limited by a substantially cylindrical radially internal face which is to be mounted around said rim, and a body (20) forming a support attached to said base, said base (10) comprising a set (11) of substantially inextensible circumferential reinforcing cords sheathed in a matrix of elastomer material, said support being able to be created by injection under pressure into a closed cavity through feed points located at the level of said body of said support, **characterised in that** said body comprises protuberances (23) corresponding to said feed points and that said base (10) comprises supplementary reinforcing elements (12) arranged, at least in part, radially and externally relative to said set (11) of circumferential reinforcing cords and axially with respect to said protuberances (23).

2. A support according to claim 1, in which said supplementary reinforcing cords (12) comprise reinforcing cords oriented at an angle (α) equal to or greater than 60 degrees relative to the circumferential direction.

3. A support according to one of claims 1 or 2, in which, said protuberances (23) being arranged substantially in the same equatorial plane, substantially in the centre portion of the body of the support, said supplementary reinforcements (12) extend axially over a length (2L) equal to or greater than one-third of the axial width of the base (10) of said support.

4. A support according to claim 3, in which the supplementary reinforcements (12) extend axially over a length (2L) less than half the axial width of the base (10) of the support.

5. A support according to one of claims 1 or 2, in which, said protuberances (23) being arranged substantially in the same equatorial plane on one side of said support, the supplementary reinforcements (12) surround the axial end of said set (11) of circumferential reinforcing cords on said side of said support and extend axially and externally relative to said set of circumferential reinforcing cords, over a length (L) equal to or greater than 10 mm.

6. A support according to claim 5, in which the supplementary reinforcing elements (12) extend axially over a length (L) equal to or less than 30 mm.

7. A support according to one of claims 1 to 6, in which said supplementary reinforcing elements (12) are formed of a twilled fabric with the cords oriented at (+α) and (-α).

8. A support according to one of claims 1 to 6, in which said supplementary reinforcing elements (12) are formed of two plies with cords oriented at (+α) and (-α).

9. A support according to one of claims 1 to 6, in which said supplementary reinforcing elements (12) are formed of a ply with cords oriented at an angle (α) equal to or greater than 80 degrees.

10. A support according to claim 9, in which said cords are oriented at 90 degrees relative to the circumferential direction.
